# EUROPÄISCHE PATENTSCHRIFT

(11) **EP 0 672 520 B1**
(45) Veröffentlichungstag und Bekanntmachung des Hinweises auf die Patenterteilung: **03.03.1999**
(21) Anmeldenummer: 94104314.3
(22) Anmeldetag: 18.03.1994
(51) Int. Cl.: B32B 15/01, A47J 36/02

(54) **Mehrschichtiger, kaltverformbarer und tiefziehfähiger Verbundkörper aus Metall**
Multilayered, cold formable and deep drawable metal composites
Matériau composite métallique multicouche, déformable à froid et apte à l'emboutissage profond

(43) Veröffentlichungstag der Anmeldung: 20.09.1995
(73) Patentinhaber: Clad Lizenz AG, CH-8360 Eschlikon (CH)
(72) Erfinder: Spring, Markus, CH-8360 Eschlikon (CH)
(74) Vertreter: Blum, Rudolf Emil Ernst

(56) Entgegenhaltungen:
- EP-A- 0 577 069
- BE-A- 434 291
- DE-A- 1 577 130
- DE-A- 3 336 736
- DE-U- 8 530 324
- GB-A- 1 116 377
- AUD 61526/73 (FINE ARTS OF AMERICA LTD.) *das ganze Dokument*

## Beschreibung

Die Erfindung betrifft einen mehrschichtigen, kaltverformbaren und tiefziehfähigen Verbundkörper aus Metall.

Ein solcher, aus mehreren miteinander verbundenen Schichten gebildeter Verbundkörper muss abhängig vom Endprodukt, das aus ihm schliesslich hergestellt wird, die unterschiedlichsten Eigenschaften aufweisen. In idealer Weise werden die Eigenschaften der einzelnen Schichten vereint. Dabei ist es ohne weiteres möglich, dass gewisse Eigenschaften, z.B. Umformeigenschaften eines mehrschichtigen Verbundkörpers wesentlich verschieden sind von den Umformeigenschaften, die jeder einzelne Werkstoff des Verbundkörpers einzeln für sich erwarten lässt.

Es gibt nun Anwendungsfälle, die einen mehrschichtigen Verbundkörper fordern, der nicht nur kaltverformbar und tiefziehfähig ist, sondern auch wärmeleitfähig und magnetisierbar ist.

Als Beispiel einer Anwendung eines solchen mehrschichtigen Verbundkörpers soll ein mehrschichtiges, tiefgezogenes Kochgeschirr mit einem Bodenabschnitt und damit einstückig ausgebildetem Wandabschnitt dienen, wobei der Bodenabschnitt im Querschnitt denselben Aufbau wie der Wandabschnitt aufweist.

Solche Kochgeschirre sollen bei traditionellen Energiequellen wie Gas, Elektro oder Halogen, jedoch insbesondere bei Induktionsherden verwendet werden können.

Der mehrschichtige Verbundkörper, aus welchem das Kochgeschirr hergestellt ist, muss wärmeleitfähig und zugleich magnetisierbar sein. Weiter muss mindestens der als Verbundkörper ausgebildete Rohling zur Herstellung des Kochgeschirres kaltumformbar sein.

Aus bekannten, mehrschichtigen Verbundkörpern tiefgezogene Kochgeschirre weisen einerseits ein schlechtes Langzeitverhalten insbesondere des Bodenabschnittes auf, indem Verformungen entstehen, d.h. die Auflagefläche des Bodenabschnittes verformt sich nach längerem Gebrauch. Andererseits und insbesondere leidet die Herstellung unter grossen Ausschussraten. Beispielsweise lösen sich bei Tiefzieh-, Nachzieh- und Nachpressoperationen des Verbundkörpers die einzelnen, ursprünglich miteinander verbundenen Schichten voneinander und/oder zerreissen, und es entstehen vor allem beim Umformen von ferritischen Edelstählen um 90° zur Walzrichtung Zonen mit Einschnürungen, die wie Rillen oder Wellen aussehen, eine Erscheinung, die in der Fachwelt als Rilligkeit bekannt ist und ein in mindestens einem weiteren Arbeitsgang erfolgendes Schleifen des Produktes benötigt. Mit anderen mehrschichtigen Verbundkörpern lassen sich auch nicht die gleichen Umformgrade erreichen.

Die AUD 61520/73 zeigt ein aus fünf Schichten bestehendes Kochgeschirr mit einer Kernschicht, die Reinaluminium enthält, welche Kernschicht zwischen zwei Aussenschichtabschnitten angeordnet ist, welche Aussenschichtabschnitte bezüglich der Kernschicht spiegelbildlich zueinander ausgebildet sind. Diese Aussenschichtabschnitte weisen jedoch nicht ihrerseits einen spiegelbildlichen Aufbau auf.

Die DE-A-1 577 130 offenbart einen mehrschichtigen, kaltverformbaren und tiefziehfähigen Verbundkörper aus Metall, mit einer Kernschicht, die Reinaluminium oder eine Aluminiumlegierung enthält, welche Kernschicht zwischen zwei Aussenschichtabschnitten angeordnet ist, die einen rostfreien Stahl und einen Kohlenstoffstahl enthalten, welche Aussenschichtabschnitte bezüglich der Kernschicht spiegelbildlich zueinander ausgebildet sind.

Jedoch sind die Aussenschichtabschnitte beider offenbarter Gegenstände nicht auch in sich spiegelbildlich ausgebildet, so dass die oben beschriebenen Nachteile immer noch auftreten.

Hier will die Erfindung Abhilfe schaffen. Die Erfindung, wie sie in den Ansprüchen gekennzeichnet ist, löst die Aufgabe, einen mehrschichtigen, kaltverformbaren und tiefziehfähigen Verbundkörper aus Metall zu schaffen, der leicht verarbeitbar, kostengünstig, wärmeleitfähig und magnetisierbar ist sowie ein kleines Gewicht aufweist, und der eine Reinaluminium oder eine Aluminiumlegierung aufweisende Kernschicht enthält, die zwischen zwei spiegelbildlich zu derselben angeordneten Aussenschicht angeordnet ist, die einen austenitischen und/oder einen ferromagnetischen Stahl enthalten und die in sich wiederum spiegelbildlich ausgebildet sind.

Die durch die Erfindung erreichten Vorteile sind im wesentlichen darin zu sehen, dass aus diesem Verbundkörper hergestellte Erzeugnisse ein ausgezeichnetes Langzeitverhalten bezüglich Verformungen und einen hohen Umformgrad aufweisen, dass bei der Herstellung des Erzeugnisses keine Verwerfungen, Schichtablösungen und Schichtreisser des verbundkörpers entstehen und damit kaum Ausschuss produziert wird, und dass das Erzeugnis ein kleines Gewicht aufweist und kostengünstig ist. Die Erfindung ist in den Ansprüchen 1 und 9 definiert. Bevorzugte Ausführungen der Erfindung sind in den Ansprüchen 2-8 definiert.

Im folgenden wird die Erfindung anhand von mehrere Ausführungswege darstellenden Zeichnungen näher erläutert.
Figur l zeigt vereinfacht einen Schnitt durch einen Teil eines aus einem Verbundkörper hergestellten Kochgeschirrs, das einen Bodenabschnitt und einen damit einstückig ausgebildeten Wandabschnitt aufweist; und

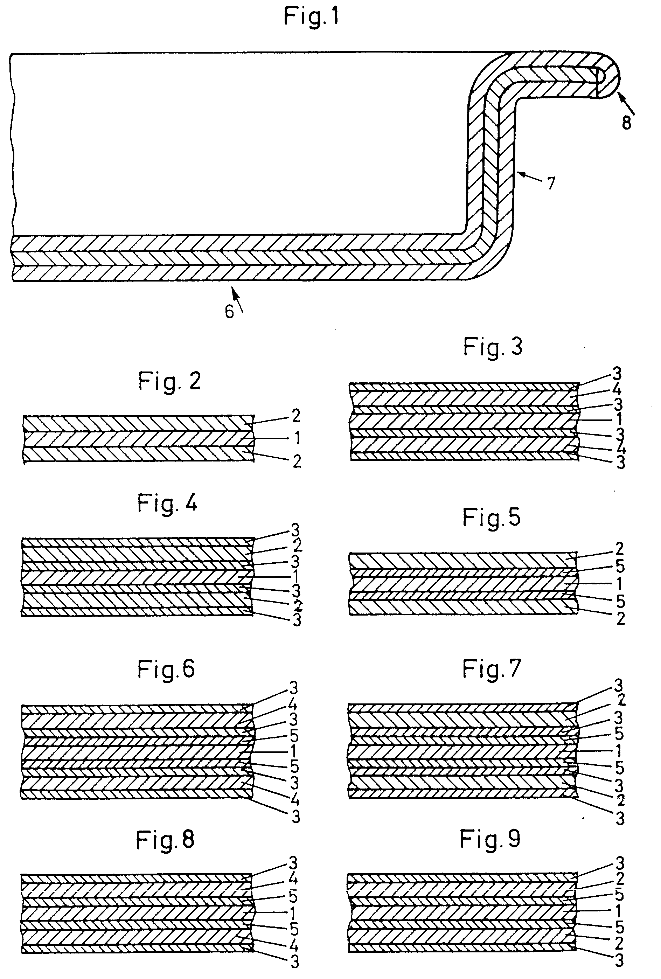

Figuren 3, 4 und 6-7 zeigen verschiedene Ausführungen von Schichtverbunden des erfindungsgemässen Verbundkörpers.

Als Beispiel eines aus dem erfindungsgemässen Verbundkörper hergestelltes Erzeugnis soll ein Kochgeschirr dienen.

Zur Herstellung des Kochgeschirrs wird vorerst der gemäss der erwünschten Ausführung mehrere Schichten enthaltende Verbundkörper als Rohling hergestellt und unter anderem gewalzt. Nach dem Walzen erfolgt das Tiefziehen, so dass der Bodenabschnitt 6 und der Wandabschnitt 7 des Kochgeschirrs gebildet werden. Möglicherweise erfolgt in einem späteren Arbeitsgang die schematisch angedeutete Schliessung oder Umbördelung 8 beim Rand des Wandabschnittes 7.

Es ist ersichtlich, dass in bezug auf eine gegenseitige Haftung der verschiedenen Schichten der Uebergangsbereich zwischen dem Bodenabschnitt 6 und dem Wandabschnitt 7 und auch entlang der zwei Abschnitte 6 und 7, da die verschiedenen Schichten plastisch verformt werden, sehr kritisch ist. Zudem können beim Kaltverformen, insbesondere wo ein Seitenabschnitt 90° zur Walzrichtung tiefgezogen wird, wellen- oder rillenförmige Verformungen entstehen.

Zur Darstellung der Figur l ist noch festzuhalten, dass die dort gezeichneten Schichten nur repräsentativ sind und auch mehr als drei Schichten vorhanden sein können, wie dem Fachmann allgemein bekannt ist.

Es wird nun grundsätzlich auf die Figuren 3, 4 und 6-7 verwiesen, welche verschiedene Ausführungen der Erfindung in der Darstellung eines jeweiligen Verbundkörpers zeigen.

Bei jeder Ausführung ist eine Kernschicht l aus Reinaluminium oder einer Aluminiumlegierung vorhanden. Die Aluminiumlegierung kann beispielsweise die Zusammensetzung nach den Typen AA-3003 oder AA-3004 aufweisen. Der Zweck dieser Kernschicht aus Reinaluminium oder einer Aluminiumlegierung ist einerseits, dass eine Gewichtsersparnis erzielt wird, und andererseits ist Aluminium ein guter Wärmeleiter, was für ein gutes Kochresultat entscheidend ist.

Auf beiden Seiten dieser Kernschicht l ist ein Aussenschichtabschnitt vorhanden, der wie noch gezeigt wird, unterschiedlich aufgebaut sein kann. Wesentlich ist, dass die jeweiligen Aussenschichtabschnitte in bezug auf die Kernschicht spiegelbildlich angeordnet sind. Diese Aussenschichtabschnitte enthalten grundsätzlich einen austenitischen und/oder einen ferromagnetischen Stahl.

Die Figur 2 zeigt eine nicht zur Erfindung gehörende Ausführung, welche eine Kernschicht l aus Reinaluminium oder einer Aluminiumlegierung aufweist, die beidseits von einer Schicht 2 aus einem ferritischen Edelstahl überdeckt ist. Der ferritische Edelstahl stellt die Magnetisierbarkeit und auch die Korrosionsbeständigkeit sicher. Der ferritische Edelstahl kann ein Cr oder CrMo-Stahl sein mit einem Gehalt von 10 - 30, vorzugsweise 12 - 25 Gew.-% Cr und im Falle von zusätzlich Mo beträgt dieser Gehalt 0,2 - 5, vorzugsweise l - 2 Gew.-% Mo. Geeignet sind ferritische Edelstähle des Bereichs der Serie AISI 400 bis 499, insbesondere ferritische Edelstähle der Qualitäten AISI 409, AISI 430, AISI 434, AISI 436 und AISI 444.

Diese ferritischen Edelstähle bilden also die Schicht 2 der Ausführung nach Fig. 2.

Hierzu ist zu bemerken, dass bei sämtlichen weiteren Ausführungen, die jeweils Schichten 2 aus einem ferritischen Edelstahl enthalten, dieser ferritische Edelstahl einer der oben genannten des Bereichs der Serie AISI 400 - 499 ist.

Figur 3 zeigt eine weitere Ausführung, bei welcher wieder die Kernschicht l aus Reinaluminium oder einer Aluminiumlegierung vorhanden ist.

Hier ist jedoch der ferromagnetische Stahl, der die Schicht 4 bildet, ein Kohlenstoffstahl, beispielsweise ein Stahl der Serie AISI 1005 - 1010. Kohlenstoffstahl ist natürlich billiger als ferritischer Edelstahl und lässt sich auch einfacher bearbeiten. Jedoch weist Kohlenstoffstahl den Nachteil auf, dass er rostet. Folglich ist gemäss Figur 3 jede Kohlenstoffstahl-Schicht 4 zwischen zwei dünneren Schichten 3 aus einem austenitischen, rostfreien Edelstahl angeordnet. Somit ist der jeweilige Aussenschichtabschnitt aus zwei Schichten 3 aus austenitischem Edelstahl und einer dazwischen angeordneten Schicht 4 aus einem Kohlenstoffstahl gebildet. Es ist ersichtlich, dass die zwei Aussenschichtabschnitte 3-4-3 spiegelbildlich zur Kernschicht l angeordnet sind, wobei zusätzlich jeder Aussenschichtabschnitt 3-4-3 für sich zur Kohlenstoffstahl-Schicht 4 spiegelbildlich angeordnete Schichten 3, hier aus einem austenitischen Edelstahl bestehend, aufweist.

Der austenitische Edelstahl enthält 15 - 29 Gew.-%, vorzugsweise l2 - 22 Gew.-% Cr und 3 - 25 Gew.-% Ni. Gegebenenfalls enthält er zusätzlich 0,2 - 5 Gew.-%, vorzugsweise 1 - 3 Gew.-% Mo. Er ist ein Edelstahl des Bereichs der Serie AISI 200 -399 und insbesondere ein Edelstahl mit den Qualitäten nach AISI 304 oder AISI 316. Auch hier gilt, dass jede Schicht 3 der verschiedenen gezeichneten Ausführungen einen der oben erwähnten austenitischen Edelstähle enthält.

Die Ausführung nach Figur 4 zeigt eine Kernschicht l aus Reinaluminium oder einer Aluminiumlegierung der eingangs erwähnten Zusammensetzung, die zwischen zwei Aussenschichtabschnitten angeordnet ist, die jeweils eine zwischen zwei Schichten 3 austenitischen Edelstählen angeordnete Schicht 2 aus einem ferritischen Edelstahl enthalten.

Figur 5 zeigt eine nicht zur Erfindung gehörende Ausführung, bei welcher die Kernschicht l nur aus einer Aluminiumlegierung besteht. Analog zur Ausführung nach Figur 2 bestehen die zwei äussersten Schichten 2 aus einem ferritischen Edelstahl. Bei dieser Ausführung ist zwischen einer jeweiligen äussersten Schicht 2 und der Kernschicht l aus einer Aluminiumlegierung eine Schicht 5 aus Reinaluminium angeordnet, so dass der jeweilige Aussenschichtabschnitt aus einer Schicht 2 aus einem ferritischen Edelstahl und einer Schicht 5 aus Reinaluminium besteht.

Die Ausführung nach Figur 6 ist mit derjenigen nach Figur 3 bzw. 5 vergleichbar, indem wieder auf der Kernschicht l aus einer Aluminiumlegierung beidseitig eine Schicht 5 aus Reinaluminium angeordnet ist. Damit besteht ein jeweiliger Aussenschichtabschnitt aus der Schicht 5 aus Reinaluminium, gefolgt von den Schichten 3 (austenitischer Edelstahl), 4 (Kohlenstoffstahl) und 3 (austenitischer Edelstahl).

In der Figur 7 ist eine weitere, mit der Figur 4 bzw. 5 vergleichbare Ausführung dargestellt. Die Kernschicht l aus einer Aluminiumlegierung ist von jeweils einer Schicht 5 aus Reinaluminium gefolgt, einer Schicht 3 aus einem austenitischen Edelstahl, eine Schicht 2 aus einem ferritischen Edelstahl und schliesslich einer weiteren Schicht 3 aus austenitischem Edelstahl.

Die Ausführung nach Figur 8 zeigt eine nicht zur Erfindung gehörende Kernschicht 1 aus einer Aluminiumlegierung. Auf beiden Seiten der Kernschicht befindet sich eine Schicht 5 aus Reinaluminium. Die Schicht 5 aus Reinaluminium ist gefolgt von einer Schicht 4 aus Kohlenstoffstahl und einer weiteren Schicht 3 aus einem austenitischen Edelstahl. Wieder sind die Schichten 5,4,3 relativ zu Kernschicht 1 spiegelbildlich zueinander angeordnet.

Die Figur 9 zeigt eine nicht zur Erfindung gehörende Ausführung mit einer Kernschicht 1 aus einer Aluminiumlegierung, an welcher beidseitig eine Schicht 5 aus Reinaluminium anschliesst. Jede Schicht 5 aus Reinaluminium ist von einer Schicht 2 aus ferritischem Edelstahl und einer weiteren Schicht 3 aus austenitischem Edelstahl.

Die Herstellung des mehrschichtigen Verbundkörpers erfolgt nach bekannten Verfahren.

Damit liegt ein gut wärmeleitfähiger und magnetisierbarer Verbundkörper mit einer Mehrzahl Schichten vor, der sich ausgezeichnet insbesondere durch Kaltverformung zu beispielsweise Kochgeschirr verarbeiten lässt.

## Patentansprüche

1. Mehrschichtiger, kaltverformbarer und tiefziehfähiger Verbundkörper aus Metall, gekennzeichnet durch
- eine Kernschicht (1), die Reinaluminium oder eine Aluminiumlegierung enthält, welche Kernschicht (1) zwischen zwei Aussenschichtabschnitten (2,3,4) angeordnet ist, welche bezüglich der Kernschicht spiegelbildlich zueinander ausgebildet sind und jeweils aus zwei Schichten (3) aus je einem austenitischen Edelstahl und einer dazwischen angeordneten Schicht (2 bzw. 4) aus einem ferritischen Edelstahl oder aus Kohlenstoffstahl besteht.

2. Verbundkörper nach Anspruch 1, dadurch gekennzeichnet, dass die Kernschicht eine Aluminiumlegierung aufweist und zwischen jedem Aussenschichtabschnitt und der Kernschicht (l) eine
- Zwischenschicht (5) aus Rein-Aluminium angeordnet ist.

3. Verbundkörper nach Anspruch 1 oder 2, dadurch gekennzeichnet, dass der ferritische Edelstahl ein Cr oder CrMo-Stahl ist.

4. Verbundkörper nach Anspruch 3, dadurch gekennzeichnet, dass der ferritische Edelstahl 10- 30, vorzugsweise 12 - 25 Gew.-% Cr enthält.

5. Verbundkörper nach Anspruch 4, dadurch gekennzeichnet, dass der ferritische Edelstahl zusätzlich 0,2 - 5, vorzugsweise 1 - 2 Gew.-% Mo enthält.

6. Verbundkörper nach Anspruch 1 oder 2, dadurch gekennzeichnet, dass der austenitische Edelstahl ein CrNi oder ein CrNiMo-Stahl ist.

7. Verbundkörper nach Anspruch 6, dadurch gekennzeichnet, dass der austenitische Edelstahl 15-29 Gew.-% Cr und 3-25 Gew.-% Ni, vorzugsweise 15-22 Gew.-% Cr und 3-25 Gew.-% Ni enthält.

8. Verbundkörper nach Anspruch 6, dadurch gekennzeichnet, dass der austenitische Edelstahl 15 - 29 Gew.-% Cr, 3 - 25 Gew.-% Ni und 0,2 - 5 Gew.-% Mo, vorzugsweise 15 - 22 Gew.-% Cr, 3 - 25 Gew.-% Ni und l - 3 Gew.-% Mo enthält.

9. Kochgeschirr, hergestellt aus einem Verbundkörper nach einem der vorangehenden Ansprüche, welches Kochgeschirr einen Bodenabschnitt (6) und daran anschliessenden und damit einstückig ausgebildeten Wandabschnitt (7) aufweist, welcher Bodenabschnitt im Querschnitt denselben Aufbau wie der Wandabschnitt aufweist.

## Claims

1. Multilayer, cold deformable composite metal article capable of being deepdrawn, characterised by
- a core layer (1) which contains pure aluminium or an aluminium alloy, which core layer (1) is located between two outer layer portions (2, 3, 4) which are designed as mirror images relative to the core layer and consist each of two layers (3) of an austenitic high-grade steel and a layer (2 and 4, respectively,) of a ferritic high-grade steel or a carbon steel located therebetween.

2. Composite article according to claim 1, characterised in that the core layer comprises an aluminium alloy and that an intermediate layer (5) of pure aluminium is located between each outer layer portion and the core layer (1).

3. Composite article according to claim 1 or 2, characterised in that the said ferritic high-grade steel is a Cr or CrMo-steel.

4. Composite article according to claim 3, characterised in that the ferritic high-grade steel includes 10 - 30, preferably 12 - 25 % by weight Cr.

5. Composite article according to claim 4, characterised in that the ferritic high-grade steel includes additionally 0.2 - 5, preferably 1 - 2 % by weight Mo.

6. Composite article according to claim 1 or 2, characterised in that the austenitic high-grade steel is a CrNi or a CrNiMo steel.

7. Composite article according to claim 6, characterised in that the austenitic high-grade steel includes 15 - 29 % by weight Cr and 3 - 25 % by weight Ni, preferably 15 - 22 % by weight Cr and 3 - 25 % by weight Ni.

8. Composite article according to claim 6, characterised in that the austenitic high-grade steel contains 15 - 29 % by weight Cr, 3 - 25 % by weight Ni and 0.2 - 5 % by weight Mo, preferably 15 - 22 % by weight Cr, 3 - 25 % by weight Ni and 1 - 3 % by weight Mo.

9. Cooking utensil, produced from a composite article in accordance with one of the preceding claims, which cooking utensil comprises a bottom portion (6) and an adjacent side wall portion (7) formed integrally therewith, which bottom portion has the same structure as the side wall portion.

## Revendications

1. Matériau composite à plusieurs couches, déformable à froid et apte à l'emboutissage profond, caractérisé par
- une strate centrale (1) comprenant de l'aluminium pur ou un alliage d'aluminium disposée entre deux couches extérieures (2, 3, 4) symétriques par rapport à la strate centrale et comportant chacune deux feuillets (3) en acier inox austénitique entre lesquels est agencée une couche intermédiaire (2, respectivement 4,) en acier inox au ferrite ou en acier enrichi au carbone.

2. Matériau composite selon la revendication 1, caractérisé en ce que la strate centrale comprend un alliage d'aluminium et qu'une couche intermédiaire (5) en aluminium pur est agencée entre chaque couche extérieure et la strate centrale (1).

3. Matériau composite selon une des revendications précédentes, caractérisé en ce que l'acier inox au ferrite est un acier au Cr ou au CrMo.

4. Matériau composite selon la revendication 3, caractérisé en ce que l'acier inox au ferrite comporte 10 à 30, et de préférence 12 à 25 % en poids de Cr.

5. Matériau composite selon la revendication 4, caractérisé en ce que l'acier inox au ferrite comporte en outre 0,2 à 5, et de préférence 1 à 2 % en poids de Mo.

6. Matériau composite selon une des revendications 1 ou 2, caractérisé en ce que l'acier inox austénitique est un acier au CrNi ou au CrNiMo.

7. Matériau composite selon la revendication 6, caractérisé en ce que l'acier inox austénitique comporte 15 à 29 % en poids de Cr et 3 à 25 % en poids de Ni, et de préférence 15 à 22 % en poids de Cr et 3 à 25 % en poids de Ni.

8. Matériau composite selon la revendication 6, caractérisé en ce que l'acier inox austénitique comporte 15 à 29 % en poids de Cr, 3 à 25 % en poids de Ni et 0,2 à 5 % en poids de Mo, et de préférence 15 à 22 % en poids de Cr, 3 à 25 % en poids de Ni et 1 à 3 % en poids de Mo.

9. Récipient de cuisson réalisé en un matériau composite selon une des revendications précédentes, ce récipient comportant un fond (6) réalisé d'une pièce avec une partie latérale (7) qui l'avoisine, le fond et la partie latérale ayant une structure identique.
